# EUROPÄISCHE PATENTSCHRIFT

(11) **EP 0 563 576 B1**
(45) Veröffentlichungstag und Bekanntmachung des Hinweises auf die Patenterteilung: **29.11.1995**
(21) Anmeldenummer: 93103022.5
(22) Anmeldetag: 26.02.1993
(51) Int. Cl.: A01G 13/02

(54) **Abdeckvorrichtung für Rasenflächen**
Device for covering lawn surfaces
Dispositif de couverture pour les surfaces de gazon

(30) Priorität: 28.03.1992 DE 4210278
(43) Veröffentlichungstag der Anmeldung: 06.10.1993
(73) Patentinhaber: Wund, Josef, D-88045 Friedrichshafen (DE)
(72) Erfinder: Wund, Josef, D-88045 Friedrichshafen (DE)
(74) Vertreter: Engelhardt, Guido, Dipl.-Ing.

(56) Entgegenhaltungen:
- DE-A- 2 710 119
- GB-A- 948 054

## Beschreibung

Die Erfindung bezieht sich auf eine Vorrichtung zur bedarfsweisen Abdeckung einer Rasenfläche, insbesondere zur Abdeckung der natürlich gewachsenen Spielfläche eines Stadions, bestehend aus mehreren neben einander angeordneten plattenartig ausgebildeten Segmenten, die eine begehbare und/oder befahrbare Bodenfläche aufweisen.

Um eine aus einem natürlichen Rasen bestehenden Spielfläche und die dieser zugeordneten Einrichtungen auch für Veranstaltungen, die einen glatten und harten Untergrund erfordern, nutzen zu können, ist es bekannt, die Rasenfläche durch auf Balken aufgenagelte Bohlen gebildete Segmente abzudecken. Die Balken liegen hierbei unmittelbar auf dem Rasen auf, so daß durch diese das Gras zusammengedrückt wird. Vor allem aber ist bei einer derartigen Abdeckung von Nachteil, daß diese nur für einen kurzen Zeitraum zur Verfügung stehen kann, da anderenfalls die gesamte Rasenfläche in einem erheblichen Maße Schaden erleidet. Abgedecktes Gras, dem kein Kohlendioxyd zugeführt wird, stirbt nämlich bereits nach etwa drei Tagen ab, so daß nach einer längeren Veranstaltung auf einer abgedeckten Rasenfläche diese nicht mehr als Spielfeld verwendbar ist. Ferner ist von Nachteil, daß die Segmente, da diese meist auf Lastkraftwagen transportiert werden, klein zu gestalten sind und die Verlegearbeiten äußerst zeit- und personalaufwendig sind. Eine Rasenfläche in dieser Weise abzudecken und die Abdeckung wiederum zu entfernen, erfordert demnach einen hohen Kostenaufwand, auch ist ein Umrüsten nicht kurzfristig vorzunehmen und durch das Befahren der Rasenfläche mit Fahrzeugen zum Transport der Segmente wird diese zusätzlich geschädigt.

Zwar sind bereits Luftkissenfahrzeuge in sehr unterschiedlichen Ausgestaltungen bekannt, die das Fahrzeug tragende Luft strömt hierbei aber mit hoher Geschwindigkeit seitlich ab, so daß diese Fahrzeuge nahezu ausschließlich als Wasserfahrzeuge Verwendung finden und nicht ohne weiteres auf dem Land einsetzbar sind.

Aufgabe der Erfindung ist es demnach, eine Vorrichtung zur bedarfsweisen Abdeckung einer Rasenfläche der vorgenannten Art zu schaffen, die nicht nur in sehr kurzer Zeit auf- und abbaubar ist, sondern durch die vor allem die Rasenfläche nicht beeinträchtigt oder gar geschädigt wird. Auch soll die Abdeckvorrichtung über einen langen Zeitraum genutzt werden können, ohne daß dadurch die Rasenfläche Schaden erleidet, nach Entfernen der Abdeckung soll diese vielmehr sofort wiederum bespielbar sein. Der Bauaufwand, mittels dem dies zu bewerkstelligen ist, soll gering gehalten werden, auch soll ein großes Spielfeld in wenigen Minuten von nur einer Person betriebssicher abgedeckt oder freigelegt werden, so daß ein Umrüsten auch ohne lange Planungsarbeiten jederzeit vorzunehmen ist und z. B. ein Stadion für sehr unterschiedliche Veranstaltungen genutzt werden kann.

Gemäß der Erfindung wird dies mit einer Abdeckvorrichtung der vorgenannten Gattung dadurch erreicht, daß die Segmente mittels vertikal gerichteter Streben mit Abstand zur Rasenfläche punktweise abgestützt sind, daß der Raum zwischen der Rasenfläche und den Segmenten durch eine an diesen angebrachte und an die Rasenfläche anlegbare Dichtung rundum abdichtbar ist und daß zum Versetzen der Segmente der Raum zwischen diesen und der Rasenfläche an eine Druckluftquelle anschließbar ist, derart, daß durch einen in dem Raum aufbaubaren Überdruck die Segmente anhebbar und versetzbar sind.

Zweckmäßig ist es hierbei, die Segmente mittels der an deren Unterseite angebrachter Streben auf in die Rasenfläche eingelassener Fundamente beispielsweise in Form von kegelig ausgebildeten Blöcken mit Abstand zu dieser und auch in Wartestellung neben der Rasenfläche, z. B. unter den Tribünen eines Stadions, vorzugsweise mittels der Streben abzustützen.

Die auf der Unterseite der Segmente angebrachten Dichtungen können durch eine von Druckluft beaufschlagbare Schürze aus einem verformbaren luftdichten Werkstoff, aus verstellbaren Platten, aus einem verformbaren Balg, aus einem aufblasbaren Schlauch oder dgl. gebildet werden.

Vorteilhaft ist es bei einer aus einer Schürze bestehenden Abdichtung an dem unteren Ende der Schürze mit seitlichem Abstand zueinander Spannleinen anzubringen, mittels denen die Schürze beispielsweise an den Streben des Segmentes angebunden ist, wobei die Spannleinen derart an den Streben des Segmentes befestigt sind, daß bei Beaufschlagung der Schürze durch Druckluft die Spannleinen unter einem Winkel α von etwa 2 bis 10° zur Rasenfläche verlaufen.

Angebracht ist es ferner, an dem unteren Ende der Dichtung eine Beschwerung anzubringen, die zur Anpassung an evtl. Bodenunebenheiten durch eine vorzugsweise in eine Tasche eingelegte Gliederkette gebildet sein kann.

Um stets eine ausreichende Abdichtung zu gewährleisten, ist es des weiteren sehr vorteilhaft, an dem unteren Ende der Dichtung jeweils einen Dichtlappen vorzusehen, der vorzugsweise mittels angelenkter Seilstücke an den Spannleinen der Schürze oder an den Streben des Segmentes angebunden ist und mit einer vorzugsweise in dessen Endbereich in einer Tasche eingelegten Beschwerung in Form einer Gliederkette versehen sein kann.

Damit die abgedeckte Rasenfläche dennoch mit Kohlendioxyd versorgt werden kann, ist es angezeigt, die Schürzen mittels an deren freien Enden angebrachter vorzugsweise aufwickelbarer Zugleinen an der Unterseite des Segmentes zu lagern.

Nach einer andersartigen Ausgestaltung kann die Abdichtung durch zwei oder mehrere gelenkig miteinander verbundene Platten gebildet sein, auch kann der die Abdichtung bildende Balg vorgespannt oder durch eine in diesem angeordnete Feder beaufschlagt werden, wobei der Balg z. B. mittels eines Seilzuges in Richtung des Segmentes verstellbar sein sollte.

Damit die Segmente unabhängig voneinander zu verstellen sind, sollten diese jeweils mit einem Ventilator versehen sein, der an den durch die Dichtungen begrenzten Raum angeschlossen ist, auch können die Segmente zur Bewässerung der Rasenfläche mit vorzugsweise auf deren Unterseite und in den Randbereichen angeordneten Spritzrohren ausgestattet werden.

Wird eine Vorrichtung zur bedarfsweisen Abdeckung einer Rasenfläche gemäß der Erfindung ausgebildet, indem die Segmente mit Abstand punktweise über der Rasenfläche abgestützt werden und unterhalb der Segmente ein abgedichteter Raum geschaffen wird, in dem ein Überdruck aufbaubar ist, ist es möglich, die Segmente beim Aufbau und beim Abbau der Abdeckung auf einem Luftpolster zu versetzen, so daß die Rasenfläche durch diese nicht berührt und demnach in keiner Weise beschädigt wird. Und da die Segmente mit Abstand zu der Rasenfläche angeordnet sind, kann das Gras, zumal diesem Kohlendioxyd zugeführt wird, trotz der Abdeckung nahezu ungehindert weiter wachsen, nach Entfernen der Segmente ist die Rasenfläche sofort wiederum als Spielfeld nutzbar.

Der Bau-, Personal- und Energieaufwand, der erforderlich ist, um die Segmente in ihrer Wartestellung anzuheben, zu versetzen und über der Rasenfläche zu arretieren, ist äußerst gering, da die projezierte Fläche der Segmente groß und somit nur ein geringer Überdruck von etwa 0,01 bar notwendig ist, um deren Gewichtskraft auszugleichen. Und im Schwebezustand können die Segmente mit geringer Schubkraft ohne Schwierigkeiten in andere Positionen verfahren werden. Der Energiebedarf zum Aufbau des Luftpolsters und um die Verstellung der Segmente vorzunehmen, ist demnach klein.

Durch die in unterschiedlicher Weise ausgebildeten Dichtungen, insbesondere die aus einer Schürze bestehenden und mit einem zusätzlichen Dichtlappen versehene Dichtungen wird dabei erreicht, daß auch bei einer unebenenen Rasenfläche nur eine sehr geringe Luftmenge seitlich entweichen kann. Das Luftpolster zum Anheben eines Segmentes ist demnach nicht nur rasch aufzubauen, auch ist die während einer Verstellung eines Segmentes zur Aufrechterhaltung des dieses tragenden Luftpolsters zu ersetzende Luftmenge gering. Die angebundenen Schürzen, insbesondere die ebenfalls abgestützten Dichtlappen, legen sich nämlich etwa tangential an dem Gras dichtend an, Luft kann somit, da praktisch kein Spalt gegeben und zumal diese einen geringen Überdruck aufweist, nur minimal abströmen. Auch wird das Gras, da die ausströmende Luft mit niedriger Geschwindigkeit und ohne störende Geräusche zu verursachen, austritt, dadurch nicht beeinträchtigt.

Eine Rasenfläche kann mit Hilfe der vorschlagsgemäß ausgebildeten Vorrichtung demnach in kurzer Zeit mit äußerst geringem Aufwand umgerüstet werden, ohne befürchten zu müssen, daß durch die Abdeckung die Spielfläche in Mitleidenschaft gezogen wird. Insbesondere ein Stadion ist auf diese Weise sehr vielfältig nutzbar.

In der Zeichnung ist ein Ausführungsbeispiel der gemäß der Erfindung ausgebildeten Vorrichtung zur bedarfsweisen Abdeckung einer Rasenfläche dargestellt, das nachfolgend im einzelnen erläutert ist. Hierbei zeigt:
- Figur 1: ein Stadion in einem Ausschnitt mit zum Teil durch Segmente abgedeckter Spielfläche,
- Figur 2: die unterhalb der Tribünen des Stadions gelagerten zur Abdeckung der Spielfläche vorgesehenen Segmente,
- Figur 3: die auf der Spielfeld des Stadions abgestützten Segmente,
- Figur 4: eines der Segmente nach den Figuren 2 und 3 in Seitenansicht während eines Verstellvorganges,
- Figur 5: das Segment nach Figur 4 in Vorderansicht, bei einem Verstellvorgang,
- Figur 6: das Segment nach Figur 5, abgestützt auf der Rasenfläche,
- Figur 7: einen Ausschnitt aus Figur 5 in vergrößerter Darstellung und
- Figuren 8 bis 10: unterschiedliche Ausgestaltungen von an den Segmenten angeordneten Dichtungen.

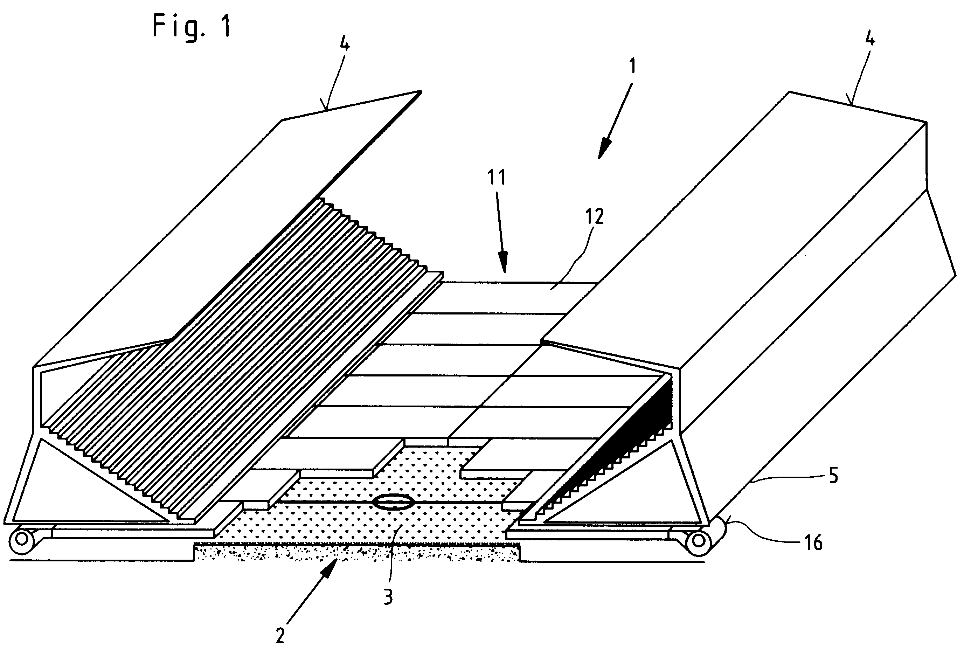

Das in Figur 1 dargestellte und mit 1 bezeichnete Stadion weist ein Spielfeld 2 auf, das durch eine natürlich gewachsene Rasenfläche 3 gebildet ist. Beiderseits des Spielfeldes 2 sind Tribünen 4 für Zuschauer angeordnet.

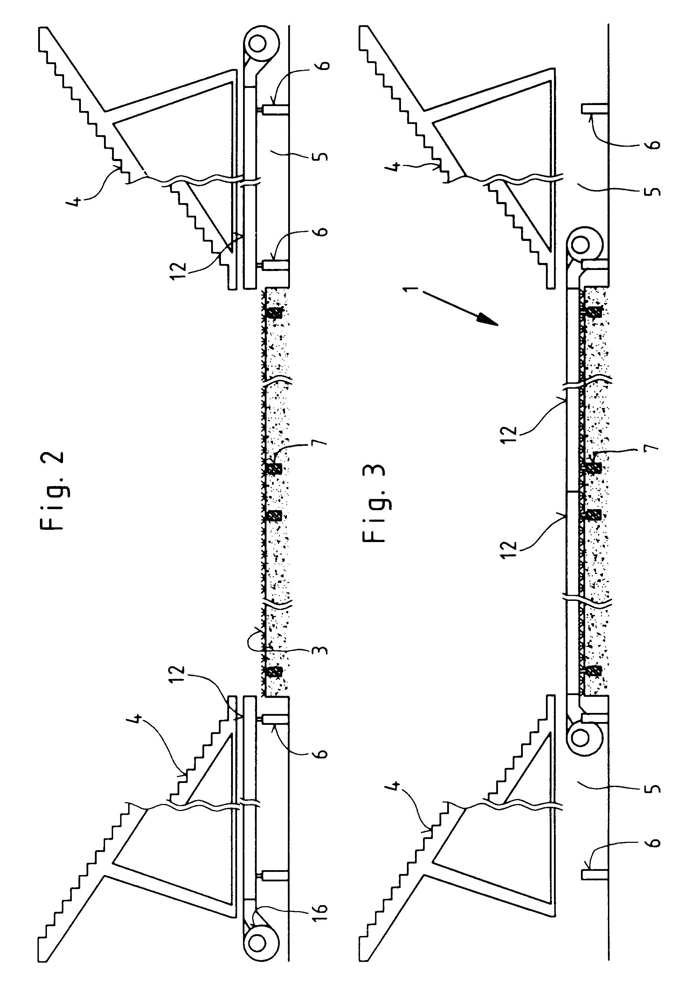

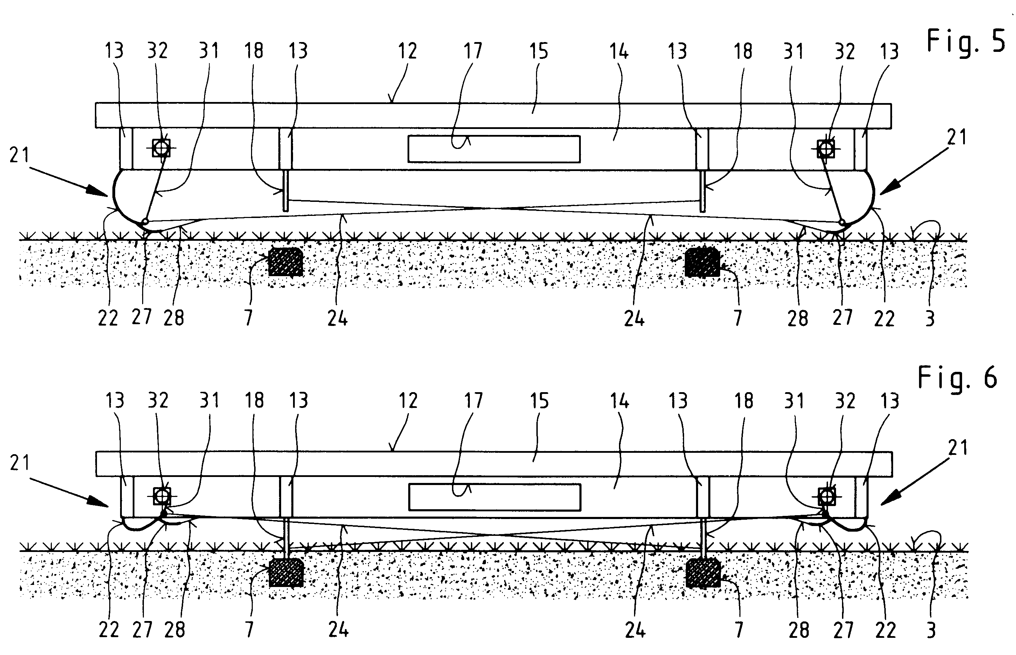

Um das Stadion 1 nicht nur für auf dem Spielfeld 2 auszutragende Rasensportarten nutzen zu können, sondern auch bei andersartigen Veranstaltungen, die einen begehbaren und/oder befahrbaren Untergrund erfordern, wie z. B. für Konzerte, ohne daß dabei die Rasenfläche 3 beschädigt wird, ist das Stadion 1 mit einer Abdeckvorrichtung 11 ausgestattet, mittels der die Rasenfläche 3 in kurzer Zeit abzudecken ist. Die Abdeckvorrichtung 11 besteht hierbei, wie dies im einzelnen den Figuren 2 bis 7 zu entnehmen ist, aus mehreren nebeneinander anzuordnenden Segmenten 12, die mit Abstand über der Rasenfläche 3 punktweise abzustützen und unterhalb der Tribünen 4 zu lagern sind. Während des Verstellens der Segmente 12 werden diese auf einem Luftpolster getragen.

Zum Abstützen der aus Längsträgern 13, Querträgern 14 und einer auf diesen angeordneten Platte 15 gebildeten Segmente 12 sind an deren Unterseiten vertikal abstehende Streben 18 angebracht, die auf in einem Raum 5 unterhalb der Tribünen 4 vorgesehenen Fundamenten 6 bzw. auf in die Rasenfläche 3 eingelassenen Fundamenten 7 aufsetzbar sind. Die Fundamente 6 und 7 sind jeweils durch kegelig gestaltete Blöcke 8 gebildet, so daß sich auf diesen kein Wasser sammeln kann. Durch die Streben 18 ist somit gewährleistet, daß auch bei abgedeckter Rasenfläche 3 die Segmente 12 nicht auf dieser aufliegen, vielmehr ist zwischen der Rasenfläche 3 und den Segmenten 12 ein Raum 20 geschaffen, in dem das Gras nahezu ungehindert wachsen kann.

Durch in den Randbereichen der Segmente 12 an diesen angebrachten in unterschiedlicher Weise gestalteten Dichtungen 21, 41, 51 oder 61 ist der Raum 20 fast vollständig abdichtbar, so daß mit Hilfe eines an den Segmenten 12 angebrachten Ventilators 16, der über eine Öffnung 17 an den Raum 20 angeschlossen ist, ein Luftpolster aufgebaut werden kann. Beim Versetzen der Segmente 12 schweben diese somit auf dem Luftpolster, die zum Versetzen erforderliche Schubkraft ist demnach sehr gering.

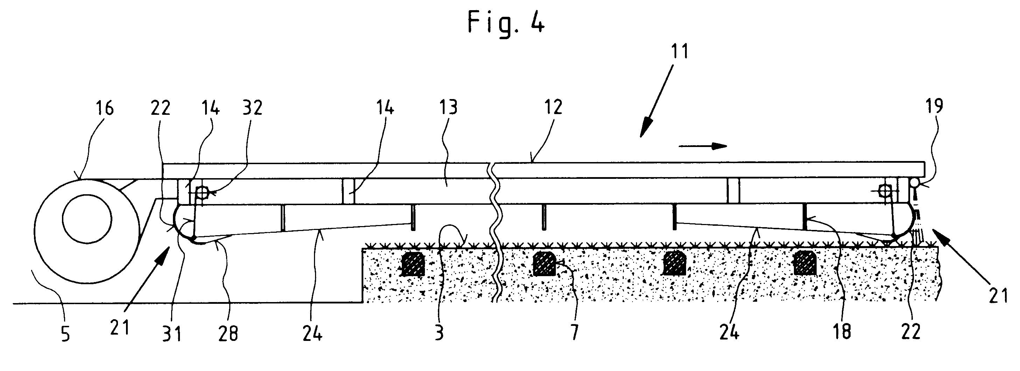

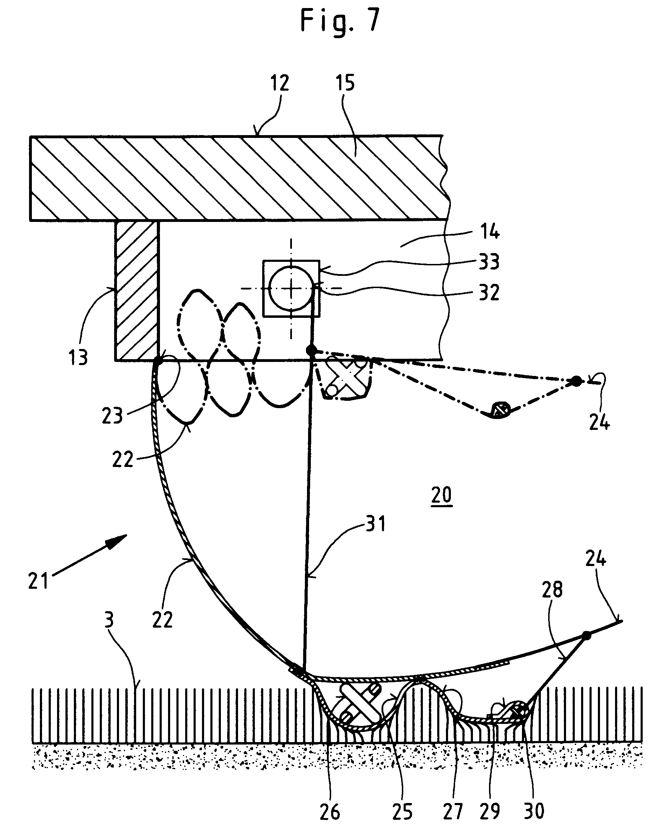

Die in den Figuren 4 bis 7 gezeigte Dichtung 21 besteht aus einer Schürze 22 aus einem elastischen luftundurchlässigen Werkstoff, die mit einem Ende bei 23 an dem Segment 12 angelenkt ist. An dem anderen Ende der Schürze 22 sind mit seitlichem Abstand zueinander Spannleinen 24 angebracht, die an den Streben 18 angebunden sind. Der Winkel α, unter dem die Spannleinen 24 bei einer Beaufschlagung der Schürzen 22 durch Druckluft verlaufen, ist hierbei etwa 4° und ist derart gewählt, daß das auf der Rasenfläche 3 aufliegende Ende der Schürze 22 nahezu tangential zu der Rasenfläche 3 verläuft. Außerdem sind die Schürzen 22 jeweils mit einer in einer Tasche 25 eingelegten sich an Bodenunebenheiten anpassenden Gliederkette 26 als Beschwerung versehen und an dem auf der Rasenfläche 3 aufliegenden Ende ist des weiteren ein Dichtlappen 27 angebracht, der mittels Seilstücken 28 an den Spannleinen 24 angebunden ist. Auch der Dichtlappen 27 weist eine Beschwerung auf, die ebenfalls aus einer in einer Tasche 29 angeordneten Gliederkette 30 besteht. Der Dichtlappen 27 schmiegt sich somit, da sich die Gliederkette 30 eventuellen Bodenunebenheiten anpaßt, wie dies in Figur 7 eingezeichnet ist, dichtend an das Gras an, der Luftaustritt ist demnach äußerst gering.

Sind die Segmente 12 in die jeweils vorgesehene Position verschoben und auf den Fundamenten 6 oder 7, in dem das Luftpolster abgebaut wird, arretiert, können die Schürzen 22 hochgezogen und an der Unterseite der Segmente 12 gelagert werden. Dazu dienen Zugleinen 31, die auf einer Welle 32, die durch einen Motor 33 antreibbar ist, aufgewickelt werden können. Die Schürzen 22 sind auf diese Weise gemäß der strichpunktierten Darstellung in Figur 7 ziehharmonikaartig verwahrt.

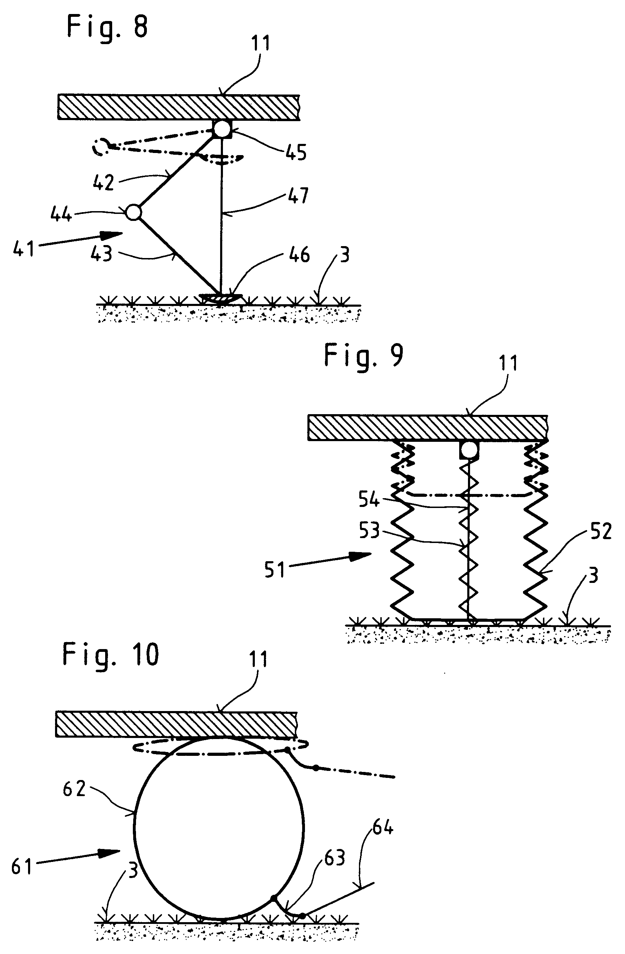

Gemäß Figur 8 besteht die Dichtung 41 aus zwei Platten 42 und 43, die durch ein Gelenk 44 miteinander verbunden und mittels eines weiteren Gelenkes 45 an dem Segment 12 befestigt sind. Am freien Ende der Platte 43 sind ein Gewicht 46 sowie Zugseile 47 angebracht. Beim Versetzen der Segmente 12 wird somit die Dichtung 41 abgesenkt, in Ruhelage kann dagegen die Dichtung 41 gemäß der strichpunktierten Darstellung zusammengeklappt werden, dem Raum 20 unter dem Segment 12 kann somit Frischluft von außen zuströmen.

Nach Figur 9 ist als Dichtung 51 ein Balg 52 vorgesehen, in den eine Feder 53 eingesetzt ist. Durch die Kraft der Feder 53 wird der Balg 52, der auch vorgespannt sein kann, beim Versetzen des Segmentes 12 an die Rasenfläche 3 angelegt, mit Hilfe von Zugseilen 54 kann der Balg 52 in Ruhelage des Segmentes 12 aber auch zusammengezogen werden.

Die Dichtung 61 nach Figur 10 besteht aus einem aufblasbaren Schlauch 62, der im Bedarfsfall an der Rasenfläche 3 anlegbar ist. An dem Schlauch 62 ist zusätzlich ein Dichtlappen 63 angebracht, der mittels Seilstücken 64 angebunden ist. Auch bei einer unebenen Rasenfläche 3 ist auf diese Weise eine gute Abdichtung zu bewerkstelligen.

## Patentansprüche

1. Vorrichtung zur bedarfsweisen Abdeckung einer Rasenfläche, insbesondere zur Abdeckung der natürlich gewachsenen Spielfläche eines Stadions, bestehend aus mehreren nebeneinander angeordneten plattenartig ausgebildeten Segmenten, die eine begehbare und/oder befahrbare Bodenfläche aufweisen,
**dadurch gekennzeichnet,**
daß die Segmente (12) mittels vertikal gerichteter Streben (18) mit Abstand zur Rasenfläche (3) punktweise abgestützbar sind,
daß der Raum (20) zwischen der Rasenfläche (3) und den Segmenten (12) durch eine an diesen angebrachte und an die Rasenfläche (3) anlegbare Dichtung (21; 41; 51; 61) rundum abdichtbar ist und
daß zum Versetzen der Segmente (12) der Raum (20) zwischen diesen und der Rasenfläche (3) an eine Druckluftquelle (16) anschließbar ist, derart, daß durch einen in dem Raum (20) aufbaubaren Überdruck die Segmente (12) anhebbar und versetzbar sind.

2. Vorrichtung nach Anspruch 1,
**dadurch gekennzeichnet,**
daß die Segmente (12) mittels der an deren Unterseite angebrachter Streben (18) auf in die Rasenfläche (3) eingelassener Fundamente (7) beispielsweise in Form von kegelig ausgebildeten Blöcken (8) mit Abstand zu dieser abgestützt sind.

3. Vorrichtung nach Anspruch 1 oder 2,
**dadurch gekennzeichnet,**
daß die Segmente (12) in Wartestellung neben der Rasenfläche (3), beispielsweise unter den Tribünen (4) eines Stadions (1), vorzugsweise mittels der Streben (18) abgestützt sind.

4. Vorrichtung nach Anspruch 1 bis 3,
**dadurch gekennzeichnet,**
daß die auf der Unterseite der Segmente (12) angebrachten Dichtungen (21; 41; 51; 61) durch eine von Druckluft beaufschlagbare Schürze (22) aus einem verformbaren luftdichten Werkstoff, aus verstellbaren Platten (42, 43), aus einem verformbaren Balg (52), aus einem aufblasbaren Schlauch (62) oder dgl. gebildet ist.

5. Vorrichtung nach Anspruch 4,
**dadurch gekennzeichnet,**
daß an dem unteren Ende der Schürze (22) mit seitlichem Abstand zueinander Spannleinen (24) angebracht sind, mittels denen die Schürze (22) beispielsweise an den Streben (18) des Segmentes (12) angebunden ist.

6. Vorrichtung nach Anspruch 5,
**dadurch gekennzeichnet,**
daß die Spannleinen (14) derart an den Streben (12) des Segmentes (11) befestigt sind, daß bei Beaufschlagung der Schürze (22) durch Druckluft die Spannleinen (24) unter einem Winkel α von etwa 2 bis 10° zur Rasenfläche (3) geneigt verlaufen.

7. Vorrichtung nach einem oder mehreren der Ansprüche 1 bis 6,
**dadurch gekennzeichnet,**
daß an dem unteren Ende der Dichtung (21; 41) eine Beschwerung (Gliederkette 26; Gewicht 46) angebracht ist.

8. Vorrichtung nach Anspruch 7,
**dadurch gekennzeichnet,**
daß die Beschwerung durch eine vorzugsweise in eine Tasche (25) eingelegte Gliederkette (26) gebildet ist.

9. Vorrichtung nach einem oder mehreren der Ansprüche 1 bis 8,
**dadurch gekennzeichnet,**
daß an dem unteren Ende der Dichtung (Schürze 22; Schlauch 62) jeweils ein Dichtlappen (27; 63) angebracht ist, der vorzugsweise mittels angelenkter Seilstücke (28; 64) an den Spannleinen (24) der Schürze (22) oder an den Streben (18) des Segmentes (12) angebunden ist.

10. Vorrichtung nach Anspruch 9,
**dadurch gekennzeichnet,**
daß der Dichtlappen (27) mit einer vorzugsweise in dessen Endbereich in einer Tasche (29) eingelegten Beschwerung in Form einer Gliederkette (30) versehen ist.

11. Vorrichtung nach einem oder mehreren der Ansprüche 1 bis 10,
**dadurch gekennzeichnet,**
daß die Schürzen (22) mittels an deren freien Enden angebrachter vorzugsweise aufwickelbarer Zugleinen (31) an der Unterseite des Segmentes (12) lagerbar sind.

12. Vorrichtung nach einem oder mehreren der Ansprüche 1 bis 11,
**dadurch gekennzeichnet,**
daß die Dichtung (41) durch zwei oder mehrere gelenkig miteinander verbundene Platten (42, 43) gebildet sind.

13. Vorrichtung nach einem oder mehreren der Ansprüche 1 bis 11,
**dadurch gekennzeichnet,**
daß der die Dichtung (51) bildende Balg (52) vorgespannt oder durch ein in diesem angeordnete Feder (53) beaufschlagbar ist und daß der Balg (52) z. B. mittels eines Seilzuges (54) in Richtung des Segmentes (12) verstellbar ist.

14. Vorrichtung nach einem oder mehreren der Ansprüche 1 bis 13,
**dadurch gekennzeichnet,**
daß die Segmente (12) jeweils mit einem Ventilator (18) versehen sind, der an den durch die Dichtungen (21; 41; 51; 61) abgedichteten Raum (20) angeschlossen ist.

15. Vorrichtung nach einem oder mehreren der Ansprüche 1 bis 14,
**dadurch gekennzeichnet,**
daß die Segmente (12) mit vorzugsweise auf deren Unterseite und in den Randbereichen angeordneten Spritzrohren (10) versehen sind.

## Claims

1. A device for covering a lawn surface when required, in particular for covering the naturally grown playing surface of a stadium, consisting of several board-like segments arranged adjacent to one another with a floor surface which can be walked and/or driven upon,
**characterized in that**,
the segments (12) can be supported on points at a distance from the lawn surface (3) by means of vertically arranged struts (18), that the space (20) between the lawn surface (3) and the segments can be sealed all the way around by means of a seal (21; 41; 51; 61) attached to the aforementioned segments and capable of being placed against the lawn surface (3), and
that in order to move the segments (12), the space (20) between the aforementioned segments and the lawn surface (3) can be connected to a compressed air source (16) in such a manner that the segments (12) can be lifted and moved by excess pressure which can be established within the space (20).

2. The device in accordance with Claim 1,
**characterized in that**,
the segments (12) are supported at a distance from the lawn surface (3) by struts (18) attached to their underside and standing on foundations (7), for example in the form of tapered blocks (8), let into the lawn surface (3).

3. The device in accordance with Claim 1 or 2,
**characterized in that**,
the segments (12) are preferably supported by the struts (18) in the parked position next to the lawn surface (3), for example underneath the stands (4) of a stadium (1).

4. The device in accordance with Claims 1 to 3,
**characterized in that**,
the seals (21; 41; 51; 61) attached to the underside of the segments (12) are produced by a skirt (22) upon which compressed air can act and which is made from a flexible air-tight material, from adjustable plates (42, 43), from a flexible bellows (52), from an inflatable hose (62) or the like.

5. The device in accordance with Claim 4,
**characterized in that**,
guy ropes (24) are attached adjacent to one another at the bottom end of the skirt (22), by means of which the skirt (22) can be attached to the struts (18) of the segment (12), for example.

6. The device in accordance with Claim 5,
**characterized in that**,
the guy ropes (24) are attached to the struts (18) of the segment (12) in such a manner that the pressure of compressed air acting on the skirt (22) causes the guy ropes (24) to adopt an angle α of approximately 2° to 10° in relation to the lawn surface (3).

7. The device in accordance with one or more of Claims 1 to 6,
**characterized in that**,
a load (linked chain 26; weight 46) is attached to the bottom end of the seal (21; 41).

8. The device in accordance with Claim 7,
**characterized in that**,
the load is formed by a linked chain (26) preferably inserted in a pocket (25).

9. The device in accordance with one or more of Claims 1 to 8,
**characterized in that**,
a sealing flap (27; 63) is attached at the bottom end of the seal (skirt 22; hose 62), which is preferably connected to the guy ropes (24) of the skirt (22) or to the struts (18) of the segment (12) by means of attached sections of rope (28; 64).

10. The device in accordance with Claim 9,
**characterized in that**,
the sealing flap (27) has a load in the form of a linked chain (30) which is inserted inside its end area, preferably inside a pocket (29).

11. The device in accordance with one or more of Claims 1 to 10,
**characterized in that**,
the skirts (22) can be positioned against the underside of the segment (12) by means of draw ropes (31), which can preferably be reeled in, attached to the free ends of the skirts (22).

12. The device in accordance with one or more of Claims 1 to 11,
**characterized in that**,
the seal (41) is formed by two or more plates (42, 43) hinged together.

13. The device in accordance with one or more of Claims 1 to 11,
**characterized in that**,
the bellows (52) which forms the seal (51) is pre-extended or can be extended by a spring (53) arranged within it, and that the bellows (52) can be moved towards the segment (12), for example by means of a winding reel (54).

14. The device in accordance with one or more of Claims 1 to 13,
**characterized in that**,
each of the segments (12) is equipped with a ventilator (16) connected to the space (20) sealed off by the seals (21; 41; 51; 61).

15. The device in accordance with one or more of Claims 1 to 14,
**characterized in that**,
the segments (12) are fitted with spray pipes (19) preferably arranged on the underside and in the area around the edge of the segments (12).

## Revendications

1. Dispositif de couverture, selon besoin, des surfaces de gazon, notamment pour la couverture de la surface de jeu au gazon naturel d'un stade, comprenant plusieurs segments sous forme de plaques, disposés l'un à côté de l'autre et munis d'une surface se prêtant à la circulation de piétons et/ou de véhicules,
caractérisé en ce que
les segments (12) sont appuyés par points à une certaine distance du gazon (3) au moyen de jambes verticales (18), que l'espace (20) entre le gazon (3) et les segments (12) peut être rendu étanche de toute part au moyen d'un joint (21; 41; 51; 61) prévu sur les segments et applicable au gazon (3) et que,
pour le déplacement des segments (12), l'espace (20) entre ceux-ci (12) et le gazon (3) peut être branché sur une source à air comprimé (16) de sorte que les segments (12) se laissent soulever et déplacer après avoir établi une surpression dans l'espace (20).

2. Dispositif d'après la revendication 1,
caractérisé en ce que
au moyen des jambes (18) prévues sur leur face inférieure, les segments (12) s'appuient sur des fondements (7) sous forme p. ex. de plots coniques (8) insérés dans le gazon (3), tout en conservant une certaine distance du gazon (3).

3. Dispositif d'après la revendication 1 ou 2,
caractérisé en ce que,
en position de repos, les segments (12) s'appuient au moyen des jambes (18), à côté du gazon (3), p. ex. sous les tribunes (4) d'un stade (1).

4. Dispositif d'après la revendication 1 à 3,
caractérisé en ce que
les joints (21; 41; 51; 61) prévus sur la face inférieure des segments (12) sont conçus sous la forme d'une jupe (22) soumise à l'air comprimé et consistant d'un matériau élastique imperméable à l'air, sous la forme de plaques réglables (42, 43), d'un soufflet déformable (52), d'un flexible gonflable (62) ou d'un élément semblable.

5. Dispositif d'après la revendication 4,
caractérisé en ce que,
à l'extrémité inférieure de la jupe (22), il est fixé des cordes de serrage (24) espacés latéralement l'une par rapport à l'autre, par lesquelles la jupe (22) est fixée p. ex. aux jambes (18) du segment (12).

6. Dispositif d'après la revendication 5,
caractérisé en ce que
les cordes de serrage (24) sont fixées sur les jambes (12) du segment (11) de sorte qu'en soumettant la jupe (22) à l'air comprimé, les cordes de serrage (24) sont inclinées d'un angle α d'env. 2 à 10° par rapport au gazon (3).

7. Dispositif d'après une ou plusieurs des revendications 1 à 6,
caractérisé en ce que,
à l'extrémité inférieure du joint (21; 41), il est prévu un poids (chaîne à maillons 26; poids 46).

8. Dispositif d'après la revendication 7,
caractérisé en ce que
le poids est formé par une chaîne à maillons (26) insérée de préférence dans une poche (25).

9. Dispositif d'après une ou plusieurs des revendications 1 à 8,
caractérisé en ce que,
à l'extrémité inférieure du joint (jupe 22; flexible 62), il est prévu respectivement une langue d'étoupage (27; 63) fixée de préférence au moyen de cordes attachées (28; 64) sur les cordes de serrage (24) de la jupe (22) ou sur les jambes (18) du segment (12).

10. Dispositif d'après la revendication 9,
caractérisé en ce que
la langue d'étoupage (27) est munie d'un poids sous forme d'une chaîne a maillons (30) insérée de préférence à son extrémité, dans une poche (29).

11. Dispositif d'après une ou plusieurs des revendications 1 à 10,
caractérisé en ce que,
au moyen de cordes de tirage (31) fixées à leurs extrémités libres et qui, de préférence, se laissent enrouler, les jupes (22) se laissent placer sur la face inférieure du segment (12).

12. Dispositif d'après une ou plusieurs des revendications 1 à 11,
caractérisé en ce que,
le joint (41) est formé par deux ou par plusieurs plaques (42, 43) liées l'une à l'autre par des articulations.

13. Dispositif d'après une ou plusieurs des revendications 1 à 11,
caractérisé en ce que
le soufflet (52) formant le joint (51) est taré ou qu'il se laisse soumettre à l'action d'un ressort (53) qui y est inséré, et que le soufflet (52) se laisse déplacer en direction du segment (12) p. ex. au moyen d'un câble de traction (54).

14. Dispositif d'après une ou plusieurs des revendications 1 à 13,
caractérisé en ce que
les segments (12) sont équipés respectivement d'un ventilateur (18) branché sur la chambre (20) étoupée par les joints (21; 41; 51; 61).

15. Dispositif d'après une ou plusieurs des revendications 1 à 14,
caractérisé en ce que
les segments (12) sont équipés de tubes de pulvérisation (10) disposés de préférence sur leur face inférieure ou sur leurs bords.
